# EUROPÄISCHE PATENTANMELDUNG

(11) **EP 0 894 754 A1**
(43) Veröffentlichungstag der Anmeldung: **03.02.1999**
(21) Anmeldenummer: 98110649.5
(22) Anmeldetag: 10.06.1998
(51) Int. Cl.: B65G 65/00

(54) **Vorrichtung zum Palettieren bzw. Depalettieren von Schlauchpaketen oder dergleichen**

(30) Priorität: 01.08.1997 DE 19733240
(71) Anmelder: Icoma FBS GmbH Packtechnik, 77855 Achern (DE)
(72) Erfinder: Riebold, Herbert, 77866 Rheinau-Helmlingen (DE); Burkard, Elmar, 77880 Sasbach (DE); Maier, Dieter, 77876 Kappelrodeck (DE)
(74) Vertreter: Thielking, Bodo, Dipl.-Ing.

(57) **Zusammenfassung**

Eine Vorrichtung zum Palettieren bzw. Depalettieren von Schlauchpaketen (10) besitzt eine höhenverfahrbare Antriebsvorrichtung (6d) für die Rollböden (1b) einer Palette (1) sowie eine Vorrichtung (6e) zum Anheben und Absenken von höhenverstellbar auf der Palette (1) geführten Preßplatten (1c). Eine höhenverfahrbare Zu- bzw. Abfördereinrichtung (3) besitzt eine waagerecht bewegliche Förderbahn (11), die beim Zu- bzw. Abführen in Höhe der Auflageflächen der Rollböden (1b) positionierbar ist. Mit der Antriebsvorrichtung (6d) für die Rollböden (1b) sind seitlich außerhalb der Palette (1) angeordnete Haltearme (6c) verbunden und gemeinsam höhenverfahrbar. An diesen Haltearmen (6c) sind einander auf unterschiedlichen Seiten der Palette (1) gegenüberliegende Huborgane (6e) befestigt, welche um vertikale Achsen verschwenkbare und höhenverfahrbare Mitnehmer (6h) für die Preßplatten (1c) aufweisen. Die Antriebsvorrichtung (6d) und die Zu- bzw. Abfördereinrichtung (3) sind auf denjenigen einander gegenüberliegenden Stirnseiten der Palette (1) angeordnet, an denen die Umlenkachsen (1i) der Rollböden (1b) liegen.

## Beschreibung

Die Erfindung betrifft eine Vorrichtung zum Palettieren bzw. Depalettieren von Schlauchpaketen aus Papier oder dergleichen nach dem Oberbegriff des Patentanspruchs 1.

Bei einer bekannten Vorrichtung dieser Art (EP 0 652 171 A1) wird das Paket in eine Lage mit Abstand oberhalb des Auflagebodens in die Palette eingefahren und bei Erreichen der vorgesehenen Position unter Ausführung einer senkrechten Absetzbewegung auf dem Auflageboden abgelegt.

Das Palettieren bzw. Depalettieren mit einer derartigen Lade- und Entladevorrichtung ist vergleichsweise zeitaufwendig.

Es muß die Ladevorrichtung für jedes Schlauchpaket an die vorgesehene Stelle in die Palette eingefahren werden und vollständig aus der Abladeposition wieder aus der Palette zurückgefahren werden, bevor das nächste Schlauchpaket auf dem gleichen Boden abgelegt werden kann.

Ausgehend von diesem Stand der Technik liegt der Erfindung die Aufgabe zugrunde, eine Vorrichtung der als be-kannt vorausgesetzten Art so auszubilden, daß sowohl die Beladegeschwindigkeit als auch die Entladegeschwindigkeit der Palette wesentlich erhöht werden kann.

Die Lösung dieser Aufgabe erfolgt mit den Merkmalen des Patentanspruchs 1.

Bevorzugte Ausgestaltungen der Erfindung sind in den Unteransprüchen beschrieben.

Die erfindungsgemäße Lösung erlaubt eine schnelle Be- und Entladung der Palette, wobei die Schlauchpakete über die einzeln und getrennt voneinander anhebbaren bzw. absenkbaren Preßplatten auf jedem Rollboden gleichmäßig belastet werden.

Nachstehend wird eine bevorzugte Ausführungsform der Erfindung anhand der Zeichnung im einzelnen beschrieben. Es zeigen:
- Figur 1 -: eine Draufsicht auf eine Gesamtanordnung, die sowohl eine Vorrichtung zum Palettieren als auch zum Depalettieren enthält, sowie Transport- und Übergabevorrichtungen für die befüllten bzw. unbefüllten Paletten,
- Figur 2 -: eine Seitenansicht in Richtung des Pfeils II auf die Palettiervorrichtung,

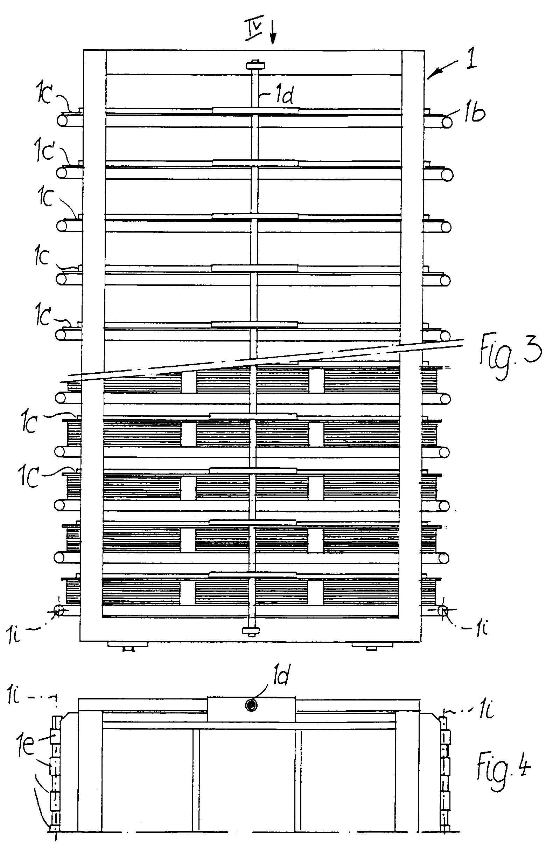

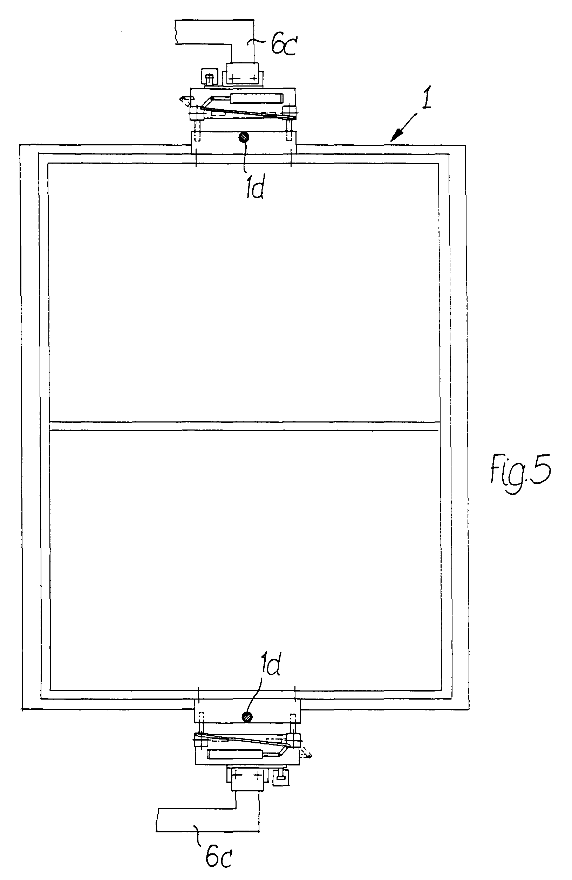

- Figur 3 -: eine teilweise belegte, teilweise leere Palette gemäß Figur 2,
- Figur 4 -: eine Teildraufsicht auf die Palette gemäß Figur 3 in Richtung des Pfeils IV,
- Figur 5 -: eine vollständige Draufsicht auf die schematisch dargestellte Palette und einen Teil der Führungselemente für die Preßplatten und deren Anhubvorrichtung,
- Figur 6 -: eine Teildraufsicht auf die Antriebsvorrichtung für die Rollböden der Palette im nicht angetriebenen Zustand,
- Figur 7 -: die Darstellung gemäß Figur 6 im Antriebszustand,
- Figur 8 -: eine Seitenansicht auf einen Rollboden in Richtung des Pfeils VIII gemäß Figur 6,

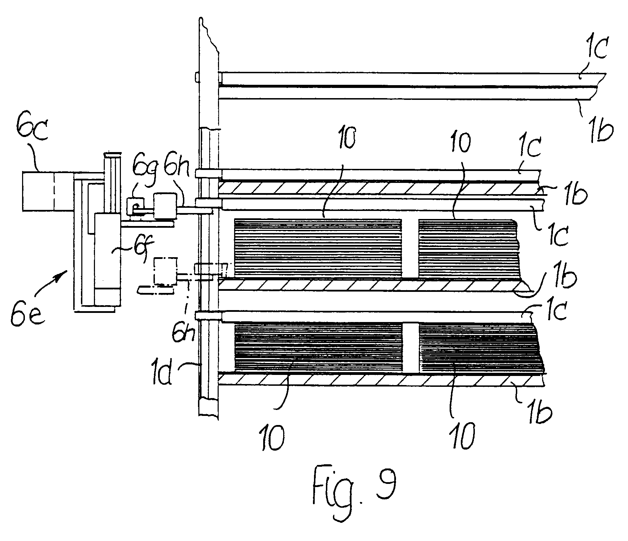

- Figur 9 -: eine Seitenansicht der Vorrichtung zum Anheben bzw. Absenken der Preßplatten mit dem benachbarten Palettenbereich,

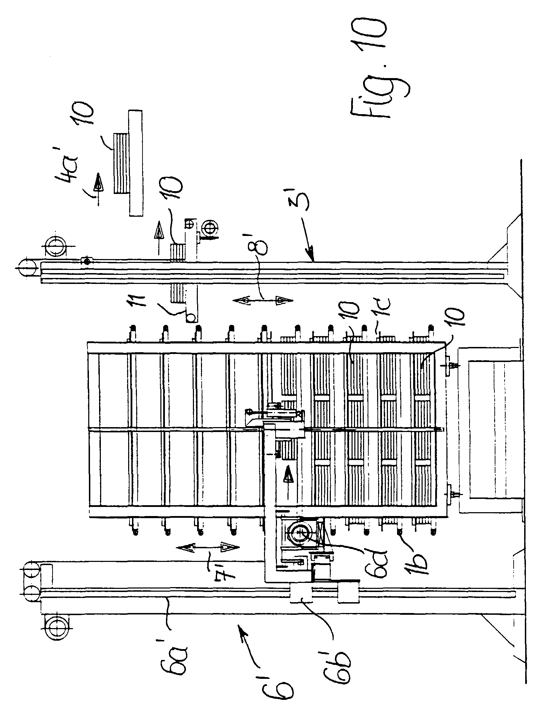

- Figur 10 -: eine Seitenansicht in Richtung des Pfeils X auf die Vorrichtung zum Depalettieren.

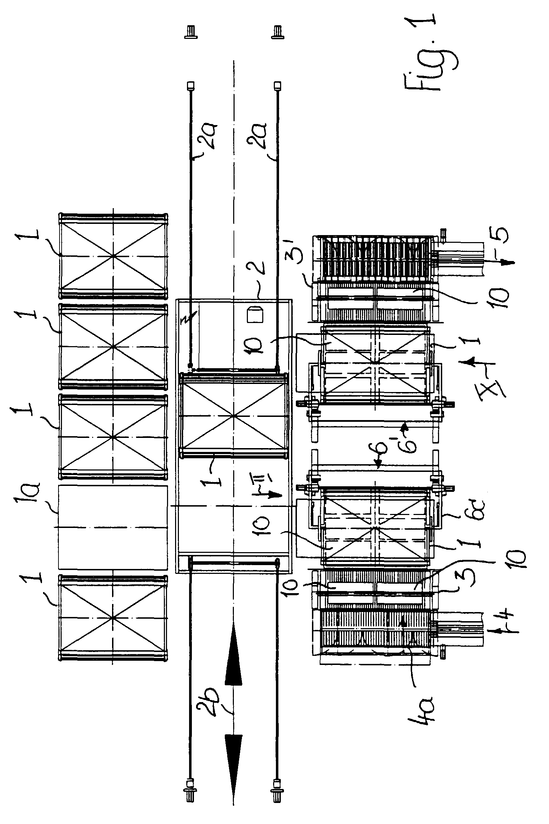

Die Vorrichtungen zum Palettieren und zum Depalettieren, deren Anordnung aus Figur 1 ersichtlich ist, unterscheiden sich nicht im Aufbau, sondern lediglich in der Art der Betätigung.

Gleiche oder einander entsprechende Teile sind bei der Palettierungsvorrichtung und der Depalettierungsvorrichtung mit gleichen Bezugszeichen versehen, die sich im Bedarfsfall lediglich durch Hochstriche voneinander unterscheiden.

Die Vorrichtung zum Palettieren ist in Figur 1 unten links dargestellt, während die Vorrichtung zum Depalettieren benachbart hierzu unten rechts dargestellt ist.

Die Schlauchpakete sind mit 10 bezeichnet und werden in Richtung des Pfeils IV der Vorrichtung zum Palettieren zugefördert. Sie gelangen über eine Querfördereinrichtung in Richtung des Pfeils IVa auf eine höhenverfahrbare Zuführfördereinrichtung, die mit 3 bezeichnet ist.

Die Zuführfördereinrichtung besitzt ein höhenverfahrbar geführtes Transportband 11, auf das die Schlauchpakete von der Querfördereinrichtung übergeben werden können. Das höhenverfahrbare Förderband 11 kann so verfahren werden, daß das Förderband 11 in gleicher Höhe wie der jeweils benachbarte Rollboden der mit 1 bezeichneten Palette liegt. Die Palette 1 befindet sich auf einem Maschinenstellplatz 9. Die Palette besitzt ortsfeste Rollböden 1b, auf denen im leeren Zustand Preßplatten 1c liegen. Die Preßplatten sind über Führungsstangen 1d, die auf unterschiedlichen Seiten der Palette 1 vorgesehen sind, in der Höhe verschieblich geführt. Sie können über eine mit 6e bezeichnete Vorrichtung aus der Auflagerposition abgehoben werden, die sie bei unbeladenem Rollboden einnehmen. Die Vorrichtung 6e zum Anheben bzw. Absenken der Preßplatten sitzt an Haltearmen 6e, die gabelförmig angeordnet sind und die Palette 1 von deren Seiten aus umgreifen. Die Haltearme 6c sind auf einem Schlitten 6b geführt, der auf einer vertikalen Führung 6a höhenverfahrbar ist in Richtung des Doppelpfeils 7. An dem höhenverfahrbaren Schlitten sitzt ein Antriebsmotor für die Rollböden 1b der Palette.

Das Förderband 11, das einen Teil der Zufördereinrichtung 3 bildet und in Richtung des Doppelpfeils 8 höhenverfahrbar ist, wird zum Beladen eines leeren Rollbodens in die Höhe des zu beladenden Rollbodens verfahren.

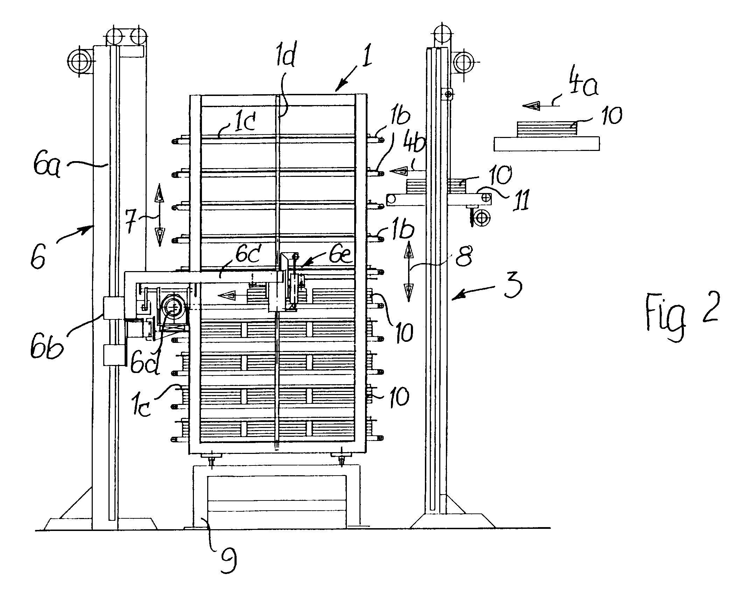

Dabei wird der Schlitten 6b auf der gegenüberliegenden Seite ebenfalls so verfahren, daß der Antrieb 6d mit dem Antrieb des Rollbodens koppelbar ist. Die Vorrichtung zum Anheben bzw. Absenken der Preßplatten wird dabei so verfahren, daß zunächst ein Anheben der Preßplatte 1c erfolgt. Es befindet sich nun die Preßplatte des zu beladenden Rollbodens in der vorgesehenen Abhebeposition. Mittels des Antriebs 6d kann nun der Rollboden 1d verfahren werden. Gleichzeitig wird die Förderbahn 11 über einen eigenen Antrieb so bewegt, daß das Schlauchpaket 10 in Richtung des Pfeils 4b in Figur 2 auf den benachbarten leeren oder teilweise belegten Rollboden 1b verfahren wird.

Sowohl der Antrieb der Rollböden als auch die Vorrichtung 6e zum Anheben bzw. Absenken der Preßplatten werden nachstehend genauer anhand der Zeichnungsfiguren 5 und 9 beschrieben.

Die Vorrichtung 6e sitzt an den Enden der Haltearme 6c. Die Vorrichtung 6e besitzt einen Hubzylinder 6f, der einen höhenverfahrbaren Mitnehmer 6h in der Höhe verfahren kann.

Der Mitnehmer 6h ist wiederum über einen ergänzenden Schwenkzylinder 6g unter den Führungsbereich der Preßplatten 1c in den Lichtraum der Palette einschwenkbar oder aus dem Lichtraum der Palette ausschwenkbar. Mit Hilfe des Hubzylinders 6f kann der Mitnehmer 6h die Preßplatte 1c aus der unmittelbaren Auflagestellung auf dem Rollboden 1b in die Freigabestellung unterhalb des nächsten darüberliegenden Rollbodens 1b bewegen. Die Vorrichtung 6e kann nach dem Befüllen des Rollbodens die Preßplatte 1c aus der angehobenen Position wieder absenken und auf den Schlauchpaketen eines jeden Bodens ablegen.

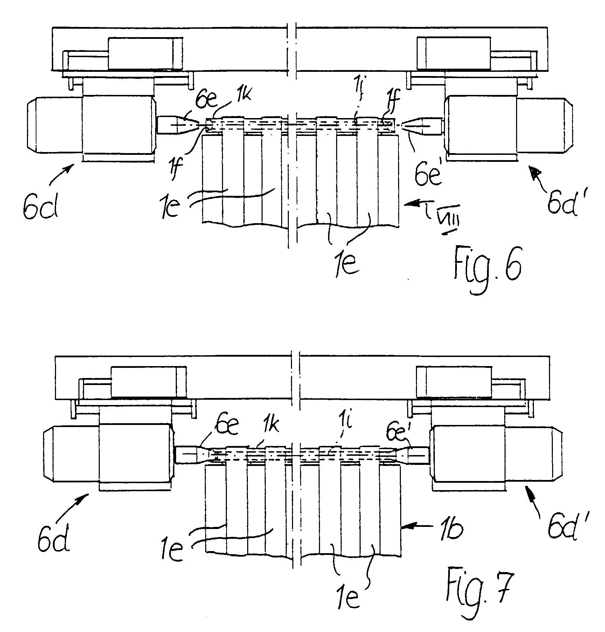

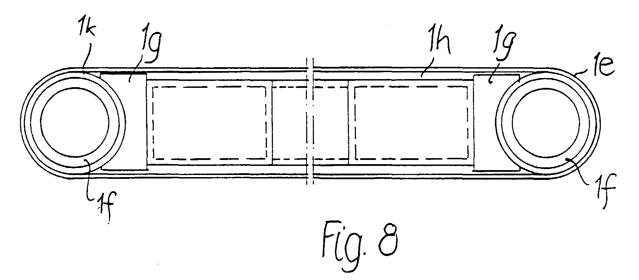

Figuren 6, 7 und 8 lassen den Aufbau eines Rollbodens 1b erkennen. Jeder Rollboden 1b weist zwei stirnseitig angeordnete Umlenkwalzen 1k auf, die zentrale konische Gegenflächen 1f zu später erläuterten Antriebskonen aufweisen. Zwei Lagerschalen 1g sind in einem vorgegebenen Abstand angeordnet. Die beiden Umlenkwalzen 1k werden durch die Kraft der die beiden Umlenkwalzen umschlingenden Transportriemen in ihre Lagerposition gezogen.

Der Antrieb der Rollböden erfolgt über eine Antriebsvorrichtung 6d, die an dem Schlitten 6b fest ist. Die Antriebsvorrichtung 6d ist doppelt vorgesehen, und zwar auf beiden Stirnseiten der Umlenkwalzen 1k, die eine Umlenkachse li aufweisen. Die Antriebsvorrichtungen 6d und 6d' besitzen zwei in Richtung auf die dazwischenliegende Umlenkwalze 1k ausgerichtete, drehbar angetriebene Konen 6e und 6e', deren Drehachse mit der Umlenkachse 1i zusammenfällt. Für einen Antrieb werden die Konen 6e und 6e' aus der in Figur 6 ersichtlichen Position aufeinander zu vorgefahren, bis die Konen 6e an den konischen Gegenflächen 1f der Umlenkwalze anliegen. Es erfolgt bei einem Drehen der Antriebsvorrichtungen 6d und 6d' eine reibschlüssige Mitnahme der Umlenkwalze 1k und damit ein Antrieb der Transportriemen 1e.

Aus Figur 1 ist ersichtlich, daß Paletten 1 über Führungsschienen 2a in Richtung des Doppelpfeils 2b vor der Palettiervorrichtung bzw. Depalettiervorrichtung verschoben werden können. Das Verschieben erfolgt mit Hilfe eines Verteilerwagens 2. Die Paletten 10 können von dem Verteilerwagen 2 sowohl in ihre vorgesehene Position in der Palettiervorrichtung und Depalettiervorrichtung eingesetzt werden als auch auf die befindlichen Stellplätze, auf denen sowohl leere als auch befüllte Paletten 1 angeordnet werden können.

## Patentansprüche

1. Vorrichtung zum Palettieren bzw. Depalettieren von Schlauchpaketen (10) aus Papier oder dergleichen, mit einer Palette (1), die übereinander angeordnete Rollböden (1b) aufweist, und zur Auflage von auf die beladenen bzw. unbeladenen Rollböden (1b) ausgebildete, höhenverstellbar geführte Preßplatten (1c), ferner mit einer höhenverfahrbaren Antriebsvorrichtung (6d) für die Rollböden (1b) und mit einer Vorrichtung (6e) zum Anheben bzw. Absenken der Preßplatten sowie mit einer höhenverfahrbaren Zu- bzw. Abfördereinrichtung (3; 3'), die eine waagerecht bewegliche Förderbahn (11) aufweist, die beim Zu- bzw. Abführen in Höhe der Auflagefläche der Rollböden (1b) positionierbar ist,
dadurch gekennzeichnet,
daß mit der Antriebsvorrichtung (6d) für die Rollböden (1b) seitlich außerhalb der Palette (1) angeordnete Haltearme (6c) verbunden und gemeinsam höhenverfahrbar sind, an denen einander auf unterschiedlichen Seiten der Palette gegenüberliegende Huborgane (6e) befestigt sind, die um vertikale Achsen verschwenkbare und höhenverfahrbare Mitnehmer (6h) für die Preßplatten (1c) aufweisen, wobei die Antriebsvorrichtung (6d) und die Zu- bzw. Abfördereinrichtung (3; 3') auf denjenigen einander gegenüberliegenden Stirnseiten der Palette angeordnet sind, an denen die Umlenkachsen (1i) der Rollböden (1b) liegen.

2. Vorrichtung nach Anspruch 1,
dadurch gekennzeichnet,
daß die verschwenkbaren und höhenverstellbaren Mitnehmer (6h) mittels zweier Zylinder-Kolben-Einheiten (6f; 6g) betätigt werden.

3. Vorrichtung nach Anspruch 1 oder 2,
dadurch gekennzeichnet,
daß die Antriebsvorrichtung (6d; 6d') für die Rollböden (1b) zwei einander gegenüberliegende, drehbar angetriebene Konen (6e; 6e') aufweist, die in Richtung einer Umlenkachse (1i) der Rollböden (1b) in und außer Anlage mit den stirnseitigen Gegenflächen (1f) von Umlenkwalzen (1k) der Rollböden (1b) verfahrbar sind.

4. Vorrichtung nach einem oder mehreren der Ansprüche 1 bis 3,
dadurch gekennzeichnet,
daß die Preßplatten (1c) an zwei einander gegenüberliegend und benachbart zu den Huborganen (6e) an der Palette (1) befestigten vertikalen Stangen (1d) frei aufwärts und abwärts beweglich geführt sind.

5. Vorrichtung nach einem oder mehreren der Ansprüche 1 bis 4,
dadurch gekennzeichnet,
daß zwei im wesentlichen gleich ausgebildete Vorrichtungen vorgesehen sind, deren eine nur zum Palettieren und deren andere nur zum Depalettieren dient.
